# EUROPÄISCHE PATENTSCHRIFT

(11) **EP 2 864 685 B1**
(45) Veröffentlichungstag und Bekanntmachung des Hinweises auf die Patenterteilung: **28.02.2018**
(21) Anmeldenummer: 13721312.0
(22) Anmeldetag: 26.04.2013
(51) Int. Cl.: F16L 37/091, F16L 21/00, F16L 21/035, F16L 37/086, F16L 37/098, F16L 47/24

(54) **ANSCHLUSSVORRICHTUNG FÜR ROHRLEITUNGEN**
CONNECTION DEVICE FOR PIPE LINES
DISPOSITIF DE RACCORDEMENT POUR CONDUITES

(30) Priorität: 26.06.2012 DE 202012102342 U
(43) Veröffentlichungstag der Anmeldung: 29.04.2015
(73) Patentinhaber: Voss Automotive GmbH, 51688 Wipperfürth (DE)
(72) Erfinder: HAGEN, Harald, 51688 Wipperfürth (DE); KLEHR, Adrian, 58802 Balve (DE); HESS, Jochem-Andreas, 51688 Wipperfürth (DE)
(74) Vertreter: Patent- und Rechtsanwälte Dr. Solf & Zapf
(86) Internationale Anmeldenummer: PCT/EP2013/058750
(87) Internationale Veröffentlichungsnummer: WO 2014/000911

(56) Entgegenhaltungen:
- EP-A1- 0 330 871
- EP-A1- 0 542 003
- EP-B1- 0 160 559
- WO-A1-2011/099186
- FR-A1- 2 368 663
- JP-A- 2003 307 290
- US-A- 4 123 090
- US-A1- 2003 006 609
- US-A1- 2005 035 597
- US-A1- 2010 253 064

## Beschreibung

Die vorliegende Erfindung betrifft eine Anschlussvorrichtung für Rohrleitungen gemäß dem Oberbegriff des Anspruchs 1. Hierbei weist ein Anschlusskörper eine Aufnahmeöffnung für eine mit einem Leitungsende einzusteckende Rohrleitung und ein innerhalb der Aufnahmeöffnung gelagertes und zum Arretieren des eingesteckten Leitungsendes gegen Herausziehen mit einer radial nach innen gerichteten Haltekraft gegen das Leitungsende wirkendes Haltelement auf, wobei das Halteelement insbesondere als federelastischer Zahnring mit einem äußeren Umfangsbereich und mit mehreren über den Umfang verteilt angeordneten, sich radial nach innen und schräg in Rohr-Einsteckrichtung geneigt erstreckenden und dadurch kraft- und/oder formschlüssig gegen das Leitungsende wirkenden Haltezähnen ausgebildet ist.

Eine derartige Anschlussvorrichtung ist aus dem Dokument EP 0 616 161 B1 bekannt. Das als Zahnring ausgebildete Halteelement weist eine Vielzahl von radialen, zahnartigen Halteärmchen auf, die über periphere Verbindungsabschnitte miteinander verbunden sind. Bei dieser bekannten Ausführung soll vorgesehen sein, dass der Zahnring mit seinem äußeren Umfangsbereich innerhalb des Anschlusskörpers derart frei beweglich gelagert ist, dass die peripheren Verbindungsabschnitte elastisch verformbar sind, so dass jeder Zahn selbst für sich beim Einstecken des Leitungsendes nicht verformt wird, sondern um jeden der beiden benachbarten peripheren Verbindungsabschnitte schwenken kann. Diese Ausführung bedingt folglich eine bewegliche, ein freies Bewegungsspiel gewährleistende Lagerung des Zahnrings in seinem äußeren Umfangsbereich. Diese freie Beweglichkeit führt aber zu dem Nachteil, dass das einzusteckende Leitungsende endseitig genau rechtwinklig abgeschnitten sein muss, damit es beim Einstecken zu einer über den Umfang gleichmäßigen Kontaktierung und Verformung des Zahnrings kommt. Ein schräg abgeschnittenes Rohr könnte wegen des undefinierten Bewegungsspiels zu einem Verkanten des Zahnrings und somit zu Problemen beim Einstecken des Rohrleitungsendes führen.
Auch die Veröffentlichung EP 0 160 559 B1 beschreibt eine ähnliche Rohr-Anschlussvorrichtung, bei der ebenfalls ein Zahn- bzw. Zackenring in seinem äußeren Umfangsbereich frei beweglich gelagert ist.
Das weitere Dokument EP 1 199 506 A1 beschreibt ebenfalls eine solche Anschlussvorrichtung, wobei aber im Gegensatz zu den obigen Veröffentlichungen das Halteelement mit seinem äußeren Umfangsbereich relativ zu dem Anschlusskörper axial, in Richtung einer Einsteckachse des Rohrleitungsendes gesehen im Wesentlichen spielfrei gehalten ist, so dass eine elastische Verformung beim Stecken bzw. Lösen des Leitungsendes nur im Bereich der Haltezähne erfolgt. Diese spielfreie Halterung des äußeren Umfangsbereiches des Halteelementes ist in der Praxis mit einem recht hohen Herstellungsaufwand verbunden.
Alle zuvor erläuterten bekannten Ausführungen haben zudem den Nachteil, dass sie nur für stabilere Rohrleitungen geeignet sind, die den auftretenden radialen Haltekräften aufgrund ihrer eigenen Formstabilität Stand halten können.

JP 2003 307290 A offenbart eine Anschlussvorrichtung nach dem Oberbegriff vom Anspruch 1. EP 0542 003 A1 offenbart eine lösbare Steckverbindung für halbstarre Rohre, bestehend aus einem Gehäuseteil mit einem Durchgangsloch zur Aufnahme des Rohres, eines Dichtringes sowie verschiedener Verbindungsteile, wobei dem Dichtring in Einsteckrichtung des Rohres ein elastisch auffederbarer Haltering vorgelagert ist, der von einem Stützring gehalten wird und dessen nach innen abstehende Federlappen einen flachen, mit seiner Spitze in Einsteckrichtung weisenden Kegelstumpf bilden, wobei ferner zwischen dem Haltering und dem Dichtring ein Anschlagring angeordnet ist, dessen den Federlappen zugewandte Seite im Auffederbereich der Federlappen konisch angeschrägt ist, und wobei in Einsteckrichtung vor dem Haltering ein zum Stützring axial verschieblicher Demontagering mit konischem Rand angeordnet ist, der beim Eindrücken des Demontagerings in das Gehäuseteil die Federlappen des Halterings aufspreizt.

US 2003/0006609 A1 offenbart eine Anschlussvorrichtung mit Zahnring und Löseelement.

Der vorliegenden Erfindung liegt die Aufgabe zu Grunde, eine Rohr-Anschlussvorrichtung zu schaffen, die sich bei konstruktiv und herstellungsmäßig einfacher Ausgestaltung durch verbesserte Gebrauchseigenschaften auszeichnet.

Eine Lösung dieser Aufgabe ist durch die Merkmale des unabhängigen Anspruchs 1 definiert. Vorteilhafte Ausgestaltungsmerkmale sind in den abhängigen Ansprüchen sowie auch in der anschließenden Beschreibung enthalten.

Demnach ist gemäß dem Anspruch 1 erfindungsgemäß vorgesehen, dass der Zahnring mit seinem äußeren Umfangsbereich mit einem durch innerhalb des Anschlusskörpers vorhandene beidseitige, axial gegenüberliegende Anlageabschnitte definiert begrenzten axialen Bewegungsspiel innerhalb des Anschlusskörpers gelagert ist, wobei der Zahnring am Übergang zwischen dem äußeren Umfangsbereich und den Haltezähnen derart mit einer innerhalb des Anschlusskörpers vorgesehenen, umfangsgemäßen Kippkante zusammenwirkt, dass beim Einstecken des Leitungsendes durch dessen Anlage an den Haltezähnen der Zahnring aus einer mit seinem äußeren Umfangsbereich in Einsteckrichtung gegen den ersten, unteren Anlageabschnitt gedrückten Lage wippenartig um die Kippkante verschwenkbar ist, bis der äußere Umfangsbereich unter geringfügiger elastischer Verformung außenseitig entgegen der Einsteckrichtung zur abgestützten Anlage an dem zweiten, axial gegenüberliegenden, oberen Anlageabschnitt gelangt, und anschließend eine elastische Biegeverformung im Bereich der die Kippkante radial nach innen überragenden Haltezähne erfolgt. Durch diese erfindungsgemäßen Maßnahmen wird somit eine spezielle Verformung des Zahnrings beim Steckvorgang erreicht. Beim Einstecken des Leitungsendes wird zunächst der Zahnring, der ja axial beweglich mit einem definiert begrenzten Spiel gelagert ist, insgesamt in Einsteckrichtung mit seinem äußeren Umfangsbereich gegen den ersten, unteren Anlageabschnitt innerhalb des Anschlusskörpers gedrückt. Der äußere Umfangsbereich des Zahnrings liegt dann parallel auf dem von einer radialen, zur Steckachse senkrechten Fläche gebildeten Anlageabschnitt, der radial nach innen mit der Kippkante endet. Beim weitergehenden Einstecken des Leitungsendes erfolgt dann in einer ersten Phase durch das Verkippen über die erfindungsgemäße Kippkante praktisch eine elastische Torsionsverformung im äußeren bis etwa mittigen Ringbereich des Zahnrings, während dann in einer anschließenden zweiten Phase eine elastische Verformung nur noch im Bereich der die Kippkante radial nach innen überragenden Haltezähne auftritt, weil der äußere Umfangsbereich durch eine zweifache Anlage, einerseits außen an dem zweiten Anlageabschnitt und andererseits am Übergang zu den Haltezähnen an der erfindungsgemäßen Kippkante, praktisch eingespannt ist. Daher können sich hauptsächlich die radial nach innen über die Kippkante überstehenden Haltezähne noch verformen. Insgesamt wird durch die erfindungsgemäßen Maßnahmen ein verbessertes, gegen unvermeidbare Toleranzen nahezu unempfindliches Steckverhalten erreicht. Zudem kann sich der Zahnring durch das definierte Spiel auch selbsttätig zu dem Leitungsende zentrieren. Schließlich ist die erfindungsgemäße Ausführung auch relativ unempfindlich gegen schräg abgeschnittene Rohr-Leitungsenden.

Vorzugsweise ist eine innerhalb der Aufnahmeöffnung des Anschlusskörpers derart koaxial angeordnete Stützhülse vorgesehen, dass das Leitungsende beim Einstecken auf eine zylindrische Außenfläche der Stützhülse aufschiebbar ist, wobei die Stützhülse im Wirkbereich des Halteelementes einen Stützabschnitt mit einer zur radialen Abstützung des Leitungsendes gegen die radiale Haltekraft ausgelegten Wandstärke aufweist, und wobei die Stützhülse axial zumindest einseitig, insbesondere aber beidseitig des Stützabschnittes jeweils einen Hülsenabschnitt mit reduzierter Wandstärke zur Vergrößerung eines wirksamen inneren Strömungsquerschnitts aufweist. Diese spezielle, erfindungsgemäße Ausgestaltung der Stützhülse gewährleistet einerseits eine gute radiale Abstützung des Leitungsendes auch gegen höhere radiale Haltekräfte des Halteelementes. Daher ist eine solche Anschlussvorrichtung auch für solche Rohr- oder auch sogar Schlauchleitungen geeignet, die selbst weniger formstabil ausgebildet sind. Andererseits werden trotz der Stützhülse gute Strömungseigenschaften gewährleistet, wozu es besonders vorteilhaft ist, den inneren Umfang der Stützhülse insgesamt über die Länge hinweg nach Art einer Venturi-Düse auszubilden.

Anhand eines in den Zeichnungen veranschaulichten, bevorzugten Ausführungsbeispiels soll die Erfindung im Folgenden weitergehend erläutert werden. Es zeigen:
- Fig. 1: einen Axialschnitt durch eine erfindungsgemäße Anschlussvorrichtung mit eingestecktem Rohr-Leitungsende,
- Fig. 2a bis 2d: jeweils eine Ausschnittvergrößerung des Bereiches II in Fig. 1 in verschiedenen Zuständen während des Vorgangs beim Einstecken des Leitungsendes,
- Fig. 3: eine gegenüber Fig. 1 verkleinerte Seiten-Explosionsansicht, wobei die einzelnen Bestandteile jeweils im Halb-Axialschnitt dargestellt sind,
- Fig. 4: eine perspektivische Explosionsdarstellung einiger Bestandteile der erfindungsgemäßen Anschlussvorrichtung, teilweise nicht im selben Maßstab, und
- Fig. 5: eine Darstellung analog zu Fig. 1 in einer alternativen Ausgestaltung als Winkelverbinder und ohne Leitungsende.

In den verschiedenen Figuren der Zeichnung sind gleiche Teile stets mit den gleichen Bezugszeichen versehen.

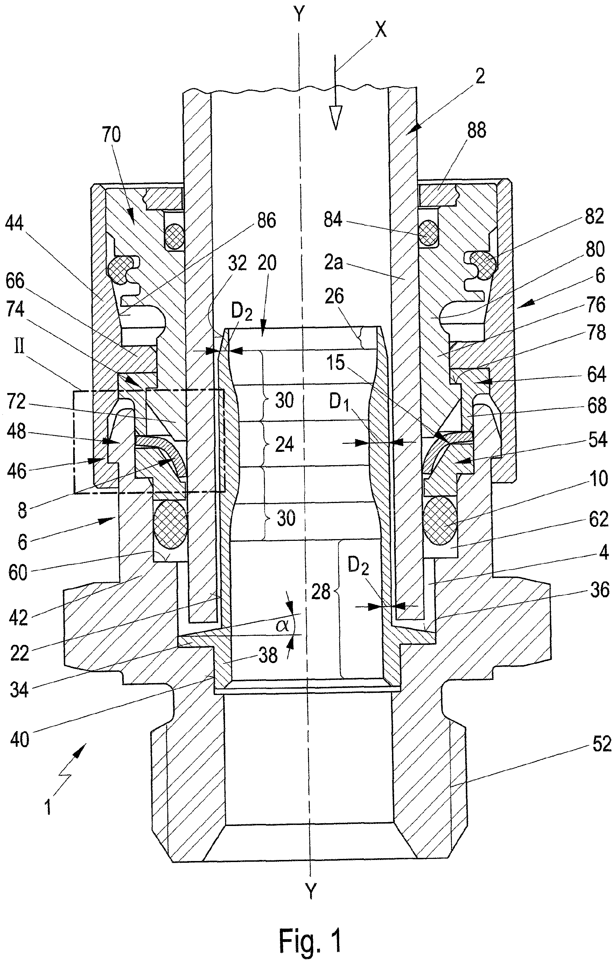

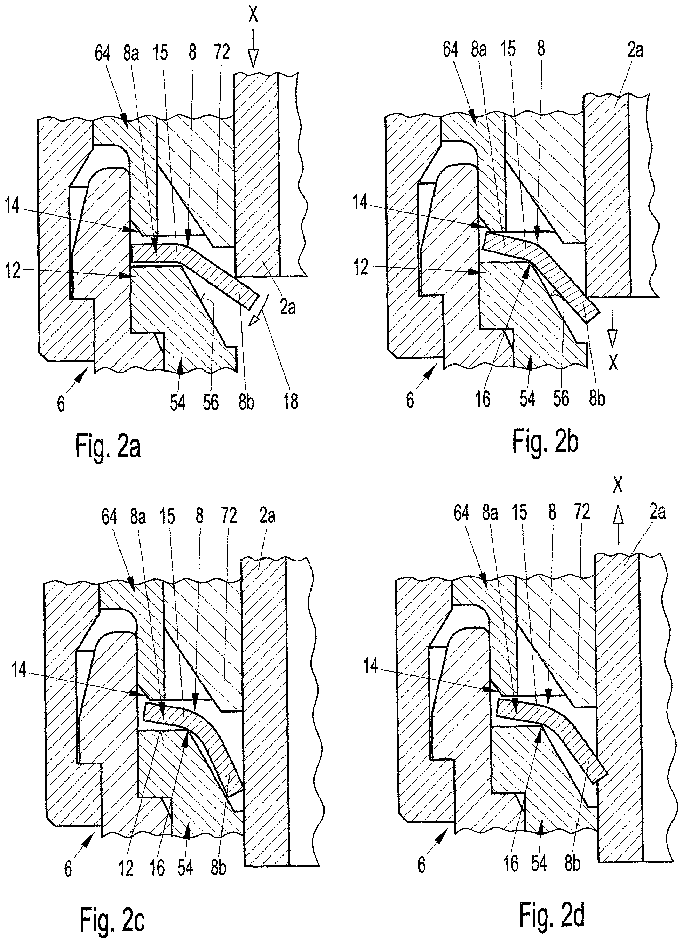

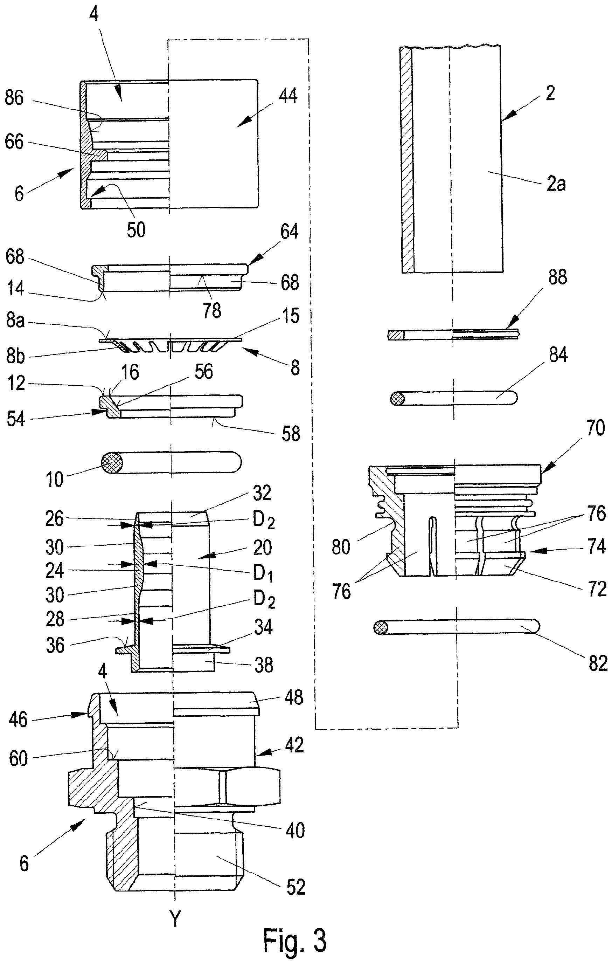

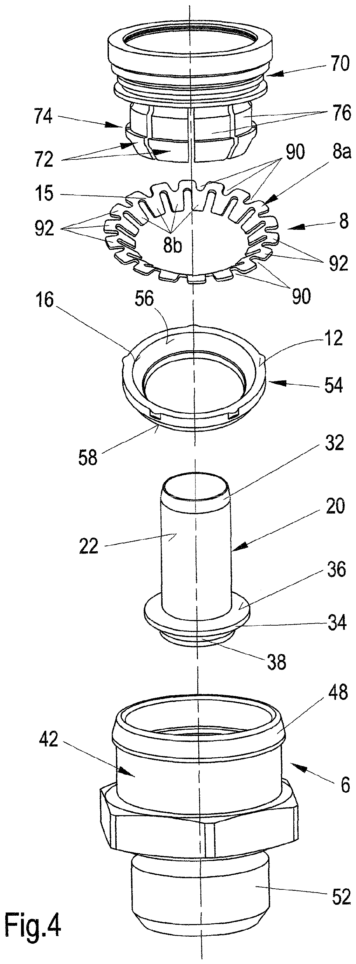

Gemäß Fig. 1 dient eine erfindungsgemäße Anschlussvorrichtung 1 zum schnellen und bevorzugt auch lösbaren Anschluss einer Rohrleitung 2 durch einfaches Einstecken eines Leitungsendes 2a in eine Aufnahmeöffnung 4 eines Anschlusskörpers 6. Die Einsteckrichtung ist in Fig. 1 und 2 jeweils mit einem Pfeil X veranschaulicht. Da somit kein Anschlussdorn zum Aufstecken der Rohrleitung 2 vorhanden ist, kann auch von einem "Dornlos-Stecksystem" gesprochen werden. Zum Arretieren des eingesteckten Leitungsendes 2a gegen Herausziehen ist innerhalb der Aufnahmeöffnung 4 ein Halteelement gelagert, welches als federelastischer Zahnring 8 - siehe insbesondere die Darstellungen in Fig. 3 und 4 - mit einem äußeren Umfangsbereich 8a und mit mehreren über den Umfang verteilt angeordneten, in Bezug zur Längsachse Y sich radial nach innen und schräg in Einsteckrichtung X geneigt erstreckenden und dadurch widerhakenartig kraft- und/oder formschlüssig gegen die äußere Umfangsfläche des Leitungsendes 2a wirkenden Haltezähnen 8b ausgebildet ist. Zur Abdichtung der eingesteckten Rohrleitung 2 nach außen ist zudem innerhalb des Anschlusskörpers 6 mindestens eine Umfangsdichtung 10 gelagert, die einen radial zur Längsachse Y zwischen dem Leitungsende 2a und dem Anschlusskörper 6 gebildeten Ringspalt nach außen abdichtet.

Der äußere Umfangsbereich 8a des Zahnrings 8 liegt im unverformten Zustand in einer zur Längsachse Y der Anschlussvorrichtung 1 senkrechten Ebene, während die Haltezähne 8b gemeinsam durch ihre Schrägstellung auf einem Konus liegen. Die Haltezähne 8b definieren mit ihren inneren Haltekanten einen Umkreis zur Längsachse Y, dessen Durchmesser im unverformten Zustand kleiner als der Außendurchmesser der Rohrleitung 2 ist. Dadurch wirken die Haltekanten mit einer radialen Haltekraft insbesondere formschlüssig oder zumindest kraftformschlüssig gegen den Außenumfang des eingesteckten Rohr-Leitungsendes 2a.

Wie sich nun insbesondere aus den vergrößerten Darstellungen in Fig. 2a bis 2d ergibt, ist der Zahnring 8 erfindungsgemäß mit seinem äußeren Umfangsbereich 8a mit einem definiert begrenzten, in Bezug auf die Längsachse Y axialen Bewegungsspiel innerhalb des Anschlusskörpers 6 gelagert. Dieses axiale Bewegungsspiel wird durch beidseitige, axial gegenüberliegende Anlageabschnitte 12 und 14 innerhalb des Anschlusskörpers 6 begrenzt. Ein erster Anlageabschnitt 12 ist auf der in Einsteckrichtung X gesehen "unteren" Seite (Fig. 1) durch eine radiale, zur Längsachse Y senkrechte Anlagefläche gebildet, und ein zweiter Anlageabschnitt 14 ist auf der axial gegenüberliegenden "oberen" Seite im radial äußeren Bereich des Zahnrings 8 angeordnet. Die Anlageabschnitte 12 und 14 sind axial mit einem lichten Abstand voneinander beabstandet, der größer als die axial gemessene Dicke des Zahnring-Umfangsbereiches 8a ist. Aus der Differenz: "Abstand der Anlageabschnitte 12, 14 minus Dicke des Zahnring-Umfangsbereiches 8a" resultiert das axiale Bewegungsspiel des Zahnrings 8. Weiterhin wirkt der Zahnring 8 am winkligen Übergang 15 zwischen dem äußeren Umfangsbereich 8a und den Haltezähnen 8b derart mit einer innerhalb des Anschlusskörpers 6 am radial inneren Umfang der den ersten Anlageabschnitt 12 bildenden radialen Anlagefläche vorgesehenen, umfangsgemäßen Kippkante 16 zusammen, dass beim Einstecken des Leitungsendes 2a durch dessen Anlage an den Haltezähnen 8b - siehe dazu Fig. 2a - der Zahnring 8 aus einer mit seinem äußeren Umfangsbereich 8a gegen den ersten, "unteren" Anlageabschnitt 12 gedrückten Ausgangslage (Fig. 2a) wippenartig um die Kippkante 16 verschwenkt bzw. tordiert wird, bis der äußere Umfangsbereich 8a radial außenseitig zur abgestützten Anlage an dem zweiten, axial gegenüberliegenden "oberen" Anlageabschnitt 14 gelangt. Die Schwenkbewegung des Zahnrings 8 um die Kippkante 16 ist in Fig. 2a durch einen Pfeil 18 veranschaulicht, und die dadurch erreichte Anlagestellung des äußeren Umfangsbereiches 8a ist in Fig. 2b dargestellt. Der radial äußere Umfang des um die Kippkante 16 wippenartig verschwenkten Zahnring-Umfangsbereiches 8a hebt sich folglich von dem ersten Anlageabschnitt 12 ab und wird gegen den zweiten Anlageabschnitt 14 bewegt. Wenn ausgehend von dieser Stellung das Leitungsende 2a weiter in Einsteckrichtung X bewegt wird, erfolgt eine elastische Biegeverformung im Bereich der die Kippkante 16 radial nach innen überragenden Haltezähne 8b, siehe dazu Fig. 2c. Der Einsteckvorgang wird dann abgeschlossen, indem das Leitungsende 2a gegen die Einsteckrichtung X zurückgezogen wird, siehe Fig. 2d. Dadurch schneiden sich die Haltezähne 8b formschlüssig oder zumindest kraftformschlüssig in den Außenumfang des Leitungsendes 2a ein.

Zusätzlich zu der bisher beschriebenen erfindungsgemäßen Ausgestaltung kann innerhalb der Aufnahmeöffnung 4 des Anschlusskörpers 6 eine Stützhülse 20 derart koaxial zur Längsachse Y angeordnet sein, dass das Leitungsende 2a beim Einstecken auf eine zylindrische Außenfläche 22 der Stützhülse 20 aufschiebbar ist, siehe auch Fig. 3 und 4. Dadurch wird das eingesteckte Leitungsende 2a von der Stützhülse 20 radial abgestützt, so dass bei Beaufschlagung mit einer von dem Zahnring 8 bewirkten radialen Haltekraft Verformungen der Rohrleitung 2 im Wirkbereich des Zahnrings 8 vermieden werden. Hierbei ist nun erfindungsgemäß vorgesehen, dass die Stützhülse 20 im Wirkbereich des Zahnrings 8 einen Stützabschnitt 24 aufweist, wobei dieser Stützabschnitt 24 eine radial gemessene Wandstärke D1 aufweist (siehe Fig. 1 und 3), die unter Berücksichtigung der Materialeigenschaften der Stützhülse 20 so ausgelegt ist, dass die Rohrleitung 2 ohne radiale Verformung gegen die in der Praxis auftretenden Haltekräfte abgestützt wird. Weiterhin ist erfindungsgemäß vorgesehen, dass die Stützhülse 20 axial zumindest einseitig einen, bevorzugt aber beidseitig des Stützabschnitts 24 jeweils einen Hülsenabschnitt 26 und/oder 28 mit gegenüber der Wandstärke D1 reduzierter Wandstärke D2 zur Vergrößerung eines wirksamen inneren Strömungsquerschnitts aufweist. Hierbei gehen die Innenumfangsflächen des Stützabschnitts 24 und der benachbarten Hülsenabschnitte 26, 28 bevorzugt derart stetig über Übergangsabschnitte 30 ineinander über, dass die Stützhülse 20 eine Innenkontur nach Art einer Venturi-Düse aufweist. Dazu wird auf Fig. 1 und 3 verwiesen. Die radial gemessene Wandstärke D1 hat gegenüber der Wandstärke D2 eine Aufdickung von mindestens 0,3 mm bis maximal 0,6 mm.

An ihrem freien, in das Leitungsende 2a eindringenden vorderen Ende weist die Stützhülse 20 eine äußere, Einführschrägfläche 32 z. B. als Fase auf. Zudem weist die Stützhülse 20 an ihrem dem freien, vorderen Ende gegenüberliegenden, innerhalb des Anschlusskörpers 6 gehaltenen Bereich einen Anschlag 34 zur Einsteckbegrenzung für das ein- bzw. aufgesteckte Leitungsende 2a auf. Hierbei weist der Anschlag 34 in vorteilhafter Ausgestaltung eine konische Anlagefläche 36 für das Leitungsende 2a auf. Diese konische Anlagefläche 36 schließt mit einer radialen, zur Längsachse Y senkrechten Ebene einen Konuswinkel α ein (siehe Fig. 1), der im Bereich von 5° bis 15° liegt und insbesondere etwa 10° beträgt. Diese Ausgestaltung gewährleistet einen selbsttätigen Ausgleich von schräg abgeschnittenen Rohrleitungen 2, die somit bis zu 15° schräg abgeschnitten sein können, wobei durch die bevorzugte Ausgestaltung insbesondere bis zu 10° ausgeglichen werden.

Zur Halterung der Stützhülse 20 innerhalb des Anschlusskörpers 6 weist die Stützhülse 20 einen zylindrischen Steckabschnitt 38 auf, der passend in eine innere Aufnahme 40 des Anschlusskörpers 6 eingesteckt wird. Hierbei fungiert der Anschlag 34 auch als Einsteckbegrenzung für die Stützhülse 20.

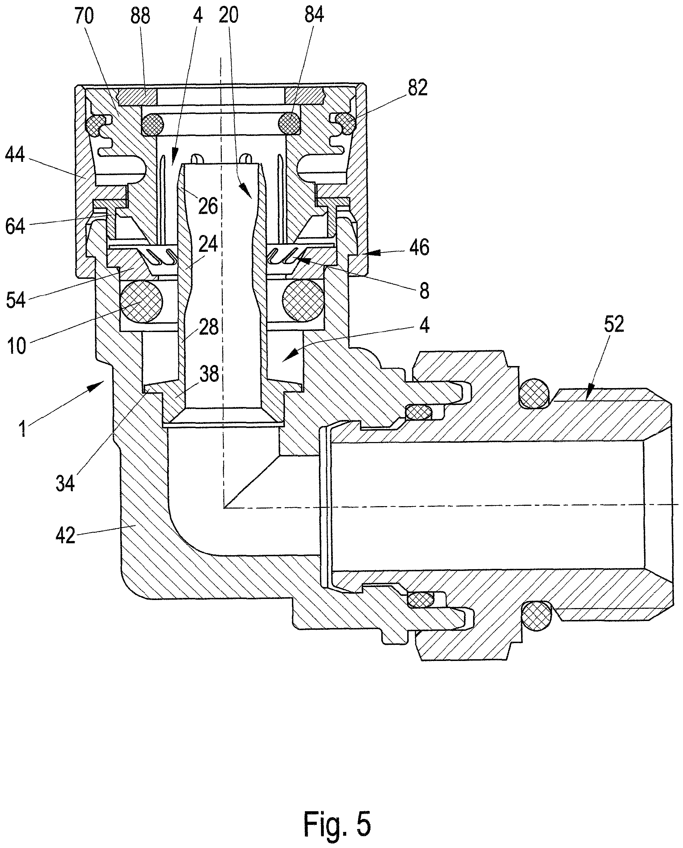

Erfindungsgemäß ist vorgesehen, dass der Anschlusskörper 6 ein in Bezug auf die Längsachse Y axial zweigeteiltes Gehäuse mit einem ersten, stutzenartigen, in Einsteckrichtung weisenden Gehäuseteil 42 und einem zweiten, eine Mündungsseite der Aufnahmeöffnung 4 bildenden, hülsenförmigen Gehäuseteil 44 aufweist. Das Gehäuseteil 42 kann beliebig gestaltet sein, z. B. als Verteiler mit unterschiedlicher Anzahl von Abgängen, gerader Durchgangsverbinder (Fig. 1) sowie auch als Winkelverbinder gemäß Fig. 5 oder als L-, T- oder Y-Verbinder. Die beiden Gehäuseteile 42, 44 sind über eine umfangsgemäß geschlossene Rastverbindung 46 miteinander verbunden, siehe insbesondere Fig. 1 Erfindungsgemäß greift dazu das erste Gehäuseteil 42 mit einem Steckabschnitt 48 axial und radial formschlüssig in eine innere, nutartige Rastausnehmung 50 des zweiten Gehäuseteils 44 ein. Zudem wirken hierbei die Gehäuseteile 42, 44 auch bereichsweise mit Press-Sitz zusammen, um eine Spaltabdichtung insbesondere als Schmutzdichtung zu gewährleisten. Das erste Gehäuseteil 42 kann als Einschraubstutzen mit einem Außengewindeansatz 52 ausgebildet sein.

Die oben beschriebene Kippkante 16 für den Zahnring 8 kann mit Vorteil an einem Einsatzring 54 gebildet sein, der bevorzugt auch den ersten Anlageabschnitt 12 in Form einer radial nach außen an die Kippkante 16 angrenzenden, zur Längsachse Y senkrechten Stirnfläche aufweist. Die Kippkante 16 ist somit am Übergang zwischen der den ersten Anlageabschnitt 12 bildenden Stirnfläche und einer innen angrenzenden Konusfläche 56 gebildet, siehe besonders auch Fig. 4.

Der Einsatzring 54 wird insbesondere mit Press-Sitz in den Anschlusskörper 6, und zwar bevorzugt in dessen erstes Gehäuseteil 42 eingesetzt. Hierbei ist mit weiterem Vorteil vorgesehen, dass der Einsatzring 54 innerhalb des Anschlusskörpers 6 mit einer in Einsteckrichtung weisenden Stirnfläche 58 gemeinsam mit einer dieser axial gegenüberliegenden Flankenfläche 60 des Anschlusskörpers 6 bzw. des ersten Gehäuseteils 42 eine Dichtungskammer 62 für die Rohr-Umfangssdichtung 10 begrenzt. Bei der Umfangsdichtung 10 handelt es sich bevorzugt um einen O-Ring, der für eine Anwendung bei Druckluft-Rohrleitungen vorzugsweise aus EPDM (Ethylen-Propylen-Dien-Monomer) oder NBR (Nitrile Butadiene Rubber = Nitril Katuschuk) besteht und für eine Anwendung bei Kraftstoff-Rohrleitungen aus einem FluorElastomer, wie es z. B. unter der Marke VITON erhältlich ist, oder Silikon.

Der Einsatzring 54 entkoppelt vorteilhafterweise die Bauräume für das Halteelement 8 einerseits und das Dichtelement 10 andererseits. Insbesondere in Kombination mit der Stützhülse 20 werden Exzentrizitäten und Ovalitäten der Rohrleitung 2 im Bereich zwischen Dichten und Halten vermieden bzw. kompensiert. Bevorzugt besteht der Einsatzring 54 aus einem Kunststoff, insbesondere POM ohne Glasfaserverstärkung, PBToder PA6.6, gegebenenfalls mit Glasfaser-Anteil GF30 %. Alternativ kann der Einsatzring 54 auch aus Metall, insbesondere Aluminium bestehen.

Der oben beschriebene zweite, obere Anlageabschnitt 14 für den äußeren Umfangsbereich 8a des Zahnrings 8 ist bevorzugt ebenfalls an einem ringförmigen Einsatzelement 64 gebildet, welches gemäß Fig. 1 innerhalb des Anschlusskörpers 6, und zwar insbesondere innerhalb des zweiten Gehäuseteils 44, in Rohr-Löserichtung an einem radial nach innen ragenden Halteringsteg 66 abgestützt ist. Hierbei wird der zweite Anlageabschnitt 14 von einer endseitigen Stirnfläche eines axial vorstehenden Ringstegs 68 des Einsatzelementes 64 gebildet, wobei dieser Ringsteg 68 vorzugsweise auch in das erste Gehäuseteil 42 bzw. in dessen Steckabschnitt 48 eingreift. In diesem Bereich kann zwischen dem Gehäuseteil 42, 44 und dem Einsatzelement 64 ein Press-Sitz zur Spaltabdichtung als Schmutzdichtung vorhanden sein.

Für eine Lösbarkeit der eingesteckten und über den Zahnring 8 arretierten Rohrleitung 2 ist ein hülsenförmiges Löseelement 70 vorgesehen. Dieses Löseelement 70 greift derart axial verschiebbar in den Anschlusskörper 6 ein, dass durch Einschieben des Löseelementes 70 in Einsteckrichtung X der Zahnring 8 zur Freigabe des Leitungsendes 2a im Bereich der Haltezähne 8b elastisch verformbar ist. Dazu wirkt das Löseelement 70 mit Betätigungsabschnitten 72 gegen die Haltezähne 8b. Dazu wird insbesondere auf Fig. 2d verwiesen; wenn ausgehend von der dort dargestellten Arretierstellung das Löseelement 70 in Einsteckrichtung X nach unten verschoben wird, wirken die Betätigungsabschnitte 72 gegen die Haltezähne 8b, so dass diese radial nach außen verformt, d.h. gespreizt werden und so das Leitungsende 2a zur Entnahme freigeben.

Das Löseelement 70 ist erfindungsgemäß innerhalb des Anschlusskörpers 6 über eine Verrastung 74 gegen Demontage gehalten. Dazu weist das Löseelement 70 an seinem in Einsteckrichtung X weisenden Ende durch axiale Schlitze gebildete Rastarme 76 auf, die mit radial nach außen weisenden Rastnasen eine radiale Stufenfläche 78 (siehe Fig. 1) innerhalb des Anschlusskörpers 6 hintergreifen, wobei mit Vorteil diese Stufenfläche 78 an dem Einsatzelement 64 gebildet ist (siehe auch Fig. 3). In weiterer vorteilhafter Ausgestaltung sind die Rastarme 76 mit dem übrigen, umfangsgemäß geschlossenen Ringteil des Löseelementes 70 über scharnierartige Einschnürungen 80 verbunden, wodurch die radiale Beweglichkeit der Rastarme 76 begünstigt wird.

Weiterhin weist das Löseelement 70 einerseits eine äußere Umfangsdichtung 82 und andererseits eine innere Umfangsdichtung 84 auf. Die äußere Umfangsdichtung 82 dient zur Abdichtung eines Ringspaltes zwischen dem hülsenförmigen Löseelement 70 und dem Anschlusskörper 6 bzw. dessen zweitem Gehäuseteil 44. Die innere Umfangsdichtung 84 dichtet einen Ringspalt zu dem Leitungsende 2a hin ab. Außerdem fungiert in bevorzugter Ausgestaltung die äußere Umfangsdichtung 82 auch als Federelement zur Erzeugung einer axialen Rückstellkraft für das Löseelement 70. Dazu wirkt die Umfangsdichtung 82 gegen eine innere, sich insbesondere konisch verengende Gegenfläche 86 innerhalb des Anschlusskörpers 6 bzw. des zweiten Gehäuseteils 44. Die Kraft zur Verformung der äußeren Umfangsdichtung 82 ist zumindest gleich oder größer als die Steckkraft der Rohrleitung 2 durch die innere Umfangsdichtung 84, so dass das Löseelement 70 beim Stecken der Rohrleitung 2 in Position bleibt und somit nicht in die Löseposition übergeht. Die äußere Umfangsdichtung 82 wird bei Betätigung des Löseelementes 70 durch eine spezielle Nutkontur stärker verformt als die innere Umfangsdichtung 84. Dadurch ergibt sich die Rückstellkraft durch die äußere Umfangsdichtung 82. Dieser Federeffekt kann auch durch die Materialeigenschaften der Umfangsdichtungen 82, 84 erreicht werden. Dazu ist die IRHD ("International Rubber Hardness Degree") der äußeren Umfangsdichtung 82 zumindest gleich oder größer als die IRHD der inneren Umfangsdichtung 84.

In der dargestellten, bevorzugten Ausführung ist schließlich noch ein ringscheibenförmiges, deckelartiges Verschlusselement 88 zum Verschließen einer mündungsseitig verbleibenden, die eingesteckte Rohrleitung 2 umschließenden ringförmigen Teilöffnung der Aufnahmeöffnung 4 vorgesehen. Gemäß Fig. 1 verschließt dieses Verschlusselement 88 auch den Bereich der inneren Umfangsdichtung 84. Dadurch kann die innere Umfangsdichtung 84 vereinfacht in das Löseelement 70 eingelegt werden, da in diesem Bereich des Löseelementes 70 kein Hinterschnitt vorhanden ist. Durch das Verschlusselement 88 wird auch ein Dampfstrahlschutz erreicht. Zudem kann das Verschlusselement 88 auch mindestens einen nicht dargestellten, axial nach außen vorstehenden Ansatz als Handhabe zur manuellen Betätigung des Löseelementes 70 aufweisen.

Abschließend sei unter Hinweis auf die Darstellung in Fig. 4 erwähnt, dass der bevorzugt als Stanzbiegeformteil aus Federstahlblech ausgebildete Zahnring 8 in seinem äußeren Umfangsbereich 8a über jeweils den Haltezähnen 8b radial gegenüberliegende, d. h. radial außen an die Haltezähne 8b angrenzende Ausnehmungen 90 in mehrere die Haltezähne 8b verbindende Verbindungsabschnitte 92 unterteilt ist. Diese Verbindungsabschnitte 92 liegen gemeinsam in der zur Achse Y senkrechten Ebene. Wie sich aus Fig. 4 ergibt, resultiert aus dieser bevorzugten Ausgestaltung - in Draufsicht gesehen - ein in Umfangsrichtung mäanderartiger Zickzackverlauf mit den jeweils abwechselnden Haltezähnen 8b und den diese verbindenden Verbindungsabschnitten 92.

Die Erfindung ist nicht auf die dargestellten und beschriebenen Ausführungsbeispiele beschränkt, sondern umfasst auch alle im Sinne der Erfindung gleichwirkenden Ausführungen.

## Patentansprüche

1. Anschlussvorrichtung (1) für Rohrleitungen (2), mit einem Anschlusskörper (6) mit einer Aufnahmeöffnung (4) für eine mit einem Leitungsende (2a) einzusteckende Rohrleitung (2) und einem innerhalb der Aufnahmeöffnung (4) gelagerten Halteelement zum Arretieren des eingesteckten Leitungsendes (2a) gegen Herausziehen, wobei das Halteelement als federelastischer Zahnring (8) mit einem äußeren Umfangsbereich (8a) und mit mehreren über den Umfang verteilt angeordneten, sich radial nach innen und schräg in Rohr-Einsteckrichtung (X) geneigt erstreckenden, kraft- und/oder formschlüssig gegen das Leitungsende (2a) wirkenden Haltezähnen (8b) ausgebildet ist, wobei der Zahnring (8) mit seinem äußeren Umfangsbereich (8a) mit einem durch beidseitige Anlageabschnitte (12, 14), und zwar einem ersten, in Einsteckrichtung gesehen unteren Anlageabschnitt (12) und einem zweiten, axial gegenüberliegenden, oberen Anlageabschnitt (14), definiert begrenzten axialen Bewegungsspiel innerhalb des Anschlusskörpers (6) gelagert ist, wobei der Zahnring (8) am Übergang (15) zwischen dem äußeren Umfangsbereich (8a) und den Haltezähnen (8b) derart mit einer innerhalb des Anschlusskörpers (6) vorgesehenen, umfangsgemäßen Kippkante (16) zusammenwirkt, dass beim Einstecken des Leitungsendes (2a) durch dessen Anlage an den Haltezähnen (8b) zunächst der Zahnring (8) aus einer mit seinem äußeren Umfangsbereich (8a) in Einsteckrichtung (X) gegen den ersten, unteren Anlageabschnitt (12) gedrückten Lage wippenartig um die Kippkante (16) verschwenkbar ist, bis der äußere Umfangsbereich (8a) zur abgestützten Anlage an dem zweiten, axial gegenüberliegenden, oberen Anlageabschnitt (14) gelangt, wobei die die Kippkante (16) radial nach innen überragenden Haltezähne (8b) elastisch biegeverformbar sind, und wobei der Anschlusskörper (6) ein axial zweigeteiltes Gehäuse mit einem ersten, in Einsteckrichtung weisenden Gehäuseteil (42) und einem zweiten, eine Mündungsseite der Aufnahmeöffnung (4) aufweisenden, hülsenförmigen Gehäuseteil (44) aufweist,
**dadurch gekennzeichnet, dass** die Gehäuseteile (42, 44) über eine umfangsgemäße Rastverbindung (46) miteinander verbunden sind, wobei das erste Gehäuseteil (42) mit einem Steckabschnitt (48) axial und radial formschlüssig in eine innere nutartige Rastausnehmung (50) des zweiten Gehäuseteils (44) eingreift, und ein hülsenförmiges, derart axial verschiebbar in den Anschlusskörper (6) eingreifendes Löseelement (70) vorhanden ist, dass durch Einschieben des Löseelements (70) der Zahnring (8) zur Freigabe des Leitungsendes (20) elastisch verformbar ist; sowie das Löseelement (70) innerhalb des Anschlusskörpers (6) über eine Verrastung (74) gegen Demontage gehalten ist, wozu das Löseelement (70) an seinem in Einsteckrichtung (X) weisenden Ende durch axiale Schlitze gebildete Rastarme (76) aufweist, die mit radial nach außen weisenden Rastnasen eine radiale Stufenfläche (78) innerhalb des Anschlusskörpers (6) hintergreifen.

2. Anschlussvorrichtung nach Anspruch 1,
**dadurch gekennzeichnet, dass** die Kippkante (16) für den Zahnring (8) an einem Einsatzring (54) gebildet ist, der bevorzugt auch den ersten Anlageabschnitt (12) in Form einer radial nach außen an die Kippkante (16) angrenzenden Stirnfläche aufweist.

3. Anschlussvorrichtung nach Anspruch 2,
**dadurch gekennzeichnet, dass** der Einsatzring (54) innerhalb des Anschlusskörpers (6) mit einer in Einsteckrichtung weisenden Stirnfläche (58) gemeinsam mit einer dieser axial gegenüberliegenden Flankenfläche (60) des Anschlusskörpers (6) eine Dichtungskammer (62) für eine Rohr-Umfangsdichtung (10) begrenzt.

4. Anschlussvorrichtung nach einem der Ansprüche 1 bis 3,
**dadurch gekennzeichnet, dass** der zweite Anlageabschnitt (14) für den äußeren Umfangsbereich (8a) des Zahnrings (8) an einem ringförmigen Einsatzelement (64) gebildet ist, das innerhalb des Anschlusskörpers (6) in Rohr-Löserichtung an einem radial nach innen ragenden Halteringsteg (66) abgestützt ist.

5. Anschlussvorrichtung nach einem der Ansprüche 1 bis 4,
**dadurch gekennzeichnet, dass** das Löseelement (70) einerseits eine äußere Umfangsdichtung (82) zur Abdichtung eines Ringspaltes zu dem Anschlusskörper (6) hin und andererseits eine innere Umfangsdichtung (84) zur Abdichtung des Ringspaltes zu dem Leitungsende (2a) hin aufweist.

6. Anschlussvorrichtung nach Anspruch 5,
**dadurch gekennzeichnet, dass** die äußere Umfangsdichtung (82) auch als Federelement zur Erzeugung einer Rückstellkraft für das Löseelement (70) ausgebildet ist.

7. Anschlussvorrichtung nach einem der Ansprüche 1 bis 6,
**gekennzeichnet durch** ein ringförmiges Verschlusselement (88) zum Verschließen einer mündungsseitig verbleibenden, die eingesteckte Rohrleitung (2) umschließenden ringförmigen Teilöffnung der Aufnahmeöffnung (4).

8. Anschlussvorrichtung nach einem der Ansprüche 1 bis 7,
**dadurch gekennzeichnet, dass** der bevorzugt als Stanzbiegeformteil aus Federstahlblech ausgebildete Zahnring (8) in seinem äußeren Umfangsbereich (8a) über jeweils den Haltezähnen (8b) radial gegenüberliegende Ausnehmungen (90) in mehrere die Haltezähne (8b) verbindende Verbindungsabschnitte (92) unterteilt ist.

9. Anschlussvorrichtung (1) nach einem der Ansprüche 1 bis 8,
**gekennzeichnet durch** eine innerhalb der Aufnahmeöffnung (4) des Anschlusskörpers (6) derart koaxial angeordnete Stützhülse (20), dass das Leitungsende (2a) beim Einstecken auf eine zylindrische Außenfläche (22) der Stützhülse (20) aufschiebbar ist, wobei die Stützhülse (20) im Wirkbereich des Halteelementes (8) einen Stützabschnitt (24) mit einer zur radialen Abstützung des Leitungsendes (2a) gegen die radiale Haltekraft ausgelegten Wandstärke (D1) aufweist, und wobei die Stützhülse (20) axial zumindest einseitig des Stützabschnitts (24) einen Hülsenabschnitt (26und/oder 28) mit reduzierter Wandstärke (D2) zur Vergrößerung eines wirksamen inneren Strömungsquerschnitts aufweist.

10. Anschlussvorrichtung nach Anspruch 9,
**dadurch gekennzeichnet, dass** die Stützhülse (20) axial beidseitig des Stützabschnittes (24) Hülsenabschnitte (26, 28) mit reduzierter Wandstärke (D2) aufweist.

11. Anschlussvorrichtung nach Anspruch 10,
**dadurch gekennzeichnet, dass** Innenumfangsflächen des Stützabschnitts (24) und der benachbarten Hülsenabschnitte (26, 28) derart stetig über Übergangsabschnitte (30) ineinander übergehen, dass die Stützhülse (20) eine Innenkontur nach Art einer Venturi-Düse aufweist.

12. Anschlussvorrichtung nach einem der Ansprüche 9 bis 11,
**dadurch gekennzeichnet, dass** die Stützhülse (20) an ihrem freien, vorderen Ende eine äußere, fasenartige Einführschrägfläche (32) aufweist.

13. Anschlussvorrichtung nach einem der Ansprüche 9 bis 12,
**dadurch gekennzeichnet, dass** die Stützhülse (20) in ihrem dem freien, vorderen Ende gegenüberliegenden, innerhalb des Anschlusskörpers (6) gehaltenen Bereich einen Anschlag (34) zur Einsteckbegrenzung für das eingesteckte Leitungsende (2a) aufweist, wobei der Anschlag (34) eine konische Anlagefläche (36) für das Leitungsende (2a) aufweist.

14. Anschlussvorrichtung nach Anspruch 13,
**dadurch gekennzeichnet, dass** die Anlagefläche (36) mit einer radialen, zur Steckachse (Y) senkrechten Ebene einen Konuswinkel (α) einschließt, der im Bereich von 5° bis 15° liegt und insbesondere 10° beträgt.

## Claims

1. Connecting device (1) for pipelines (2), having a connecting body (6) with an accommodating opening (4) for a pipeline (2) which is to be plugged in by way of a line end (2a), and with a retaining element, which is mounted within the accommodating opening (4) and is intended for arresting the plugged-in line end (2a) against being pulled out, wherein the retaining element is designed in the form of a resiliently elastic toothed ring (8) with an outer circumferential region (8a) and with a plurality of circumferentially distributed retaining teeth (8b) which are inclined radially inwardly, and in a sloping manner, in the pipe plug-in direction (X) and act with force-fitting and/or form-fitting action against the line end (2a), wherein the toothed ring (8) has its outer circumferential region (8a) mounted within the connecting body (6) with an amount of axial play which is delimited in a defined manner by abutment portions (12, 14) on either side, to be precise a first, lower abutment portion (12), as seen in the plug-in direction, and a second, axially opposite, upper abutment portion (14), wherein the toothed ring (8), at the transition (15) between the outer circumferential region (8a) and the retaining teeth (8b), interacts with a circumferential tilting edge (16), provided within the connecting body (6), such that, as a result of the line end (2a) butting against the retaining teeth (8b) as it is being plugged in, first of all the toothed ring (8) can be pivoted in a rocker-like manner about the tilting edge (16) out of a position in which it has its outer circumferential region (8a) pushed in the plug-in direction (X) against the first, lower abutment portion (12), until the outer circumferential region (8a) comes into supported abutment against the second, axially opposite, upper abutment portion (14), wherein the retaining teeth (8b), which project radially inwardly beyond the tilting edge (16), can be subjected to elastic bending deformation, and wherein the connecting body (6) has a housing which is divided axially in two and has a first housing part (42), oriented in the plug-in direction, and a second, sleeve-like housing part (44), having a mouth side of the accommodating opening (4),
**characterized in that** the housing parts (42, 44) are connected to one another via a circumferential latching connection (46), wherein the first housing part (42) has a plug-in portion (48) engaging axially and with radially form-fitting action in an inner, groove-like latching recess (50) of the second housing part (44), and a sleeve-like release element (70) is present, which engages in an axially displaceable manner in the connecting body (6) such that, by virtue of the release element (70) being pushed in, the toothed ring (8) can be deformed elastically in order to free the line end (20); and the release element (70) is retained against removal within the connecting body (6) via a latching means (74), for which purpose, at its end which is oriented in the plug-in direction (X), the release element (70) has latching arms (76) which are formed by axial slots and have radially outwardly oriented latching noses engaging behind a radial step surface (78) within the connecting body (6).

2. Connecting device according to Claim 1,
**characterized in that** the tilting edge (16) for the toothed ring (8) is formed on an insert ring (54), which preferably also has the first abutment portion (12) in the form of an end surface which is adjacent to the tilting edge (16) in the radially outward direction.

3. Connecting device according to Claim 2,
**characterized in that** the insert ring (54), within the connecting body (6), uses an end surface (58), oriented in the plug-in direction, together with a flank surface (60) of the connecting body (6), said flank surface being located axially opposite said end surface, to delimit a sealing chamber (62) for a circumferential pipe seal (10).

4. Connecting device according to one of Claims 1 to 3,
**characterized in that** the second abutment portion (14), for the outer circumferential region (8a) of the toothed ring (8), is formed on an annular insert element (64), which is supported within the connecting body (6), in the pipe-release direction, on a radially inwardly projecting retaining-ring crosspiece (66).

5. Connecting device according to one of Claims 1 to 4,
**characterized in that** the release element (70), on the one hand, has an outer circumferential seal (82) for sealing an annular gap in the direction of the connecting body (6) and, on the other hand, has an inner circumferential seal (84) for sealing the annular gap in the direction of the line end (2a) .

6. Connecting device according to Claim 5,
**characterized in that** the outer circumferential seal (82) is also designed in the form of a spring element for generating a restoring force for the release element (70).

7. Connecting device according to one of Claims 1 to 6,
**characterized by** an annular closure element (88) for closing an annular sub-opening of the accommodating opening (4), said sub-opening remaining at the mouth and enclosing the plugged-in pipeline (2).

8. Connecting device according to one of Claims 1 to 7,
**characterized in that** the toothed ring (8), which is designed preferably in the form of a punched/bent part made of spring-steel sheet, is subdivided in its outer circumferential region (8a), via recesses (90) located radially opposite the retaining teeth (8b) in each case, into a plurality of connecting portions (92) which connect the retaining teeth (8b).

9. Connecting device (1) according to one of Claims 1 to 8,
**characterized by** a supporting sleeve (20), which is arranged coaxially within the accommodating opening (4) of the connecting body (6) such that the line end (2a), during the plugging-in operation, can be pushed onto a cylindrical outer surface (22) of the supporting sleeve (20), wherein the supporting sleeve (20), in the region of action of the retaining element (8), has a supporting portion (24) with a wall thickness (D1) which is designed for radially supporting the line end (2a) counter to the radial retaining force, and wherein the supporting sleeve (20), at least on one side of the supporting portion (24) in the axial direction, has a sleeve portion (26 and/or 28) of reduced wall thickness (D2) for increasing an effective inner flow cross section.

10. Connecting device according to Claim 9,
**characterized in that** the supporting sleeve (20) has sleeve portions (26, 28) of reduced wall thickness (D2) on either side of the supporting portion (24) in the axial direction.

11. Connecting device according to Claim 10,
**characterized in that** inner circumferential surfaces of the supporting portion (24) and of the adjacent sleeve portions (26, 28) merge continuously one inside the other via transition portions (30) such that the supporting sleeve (20) has an inner contour in the manner of a venturi nozzle.

12. Connecting device according to one of Claims 9 to 11,
**characterized in that**, at its free, front end, the supporting sleeve (20) has an outer, chamfer-like sloping introduction surface (32).

13. Connecting device according to one of Claims 9 to 12,
**characterized in that**, in its region which is retained within the connecting body (6) and is located opposite the free, front end, the supporting sleeve (20) has a stop (34) for delimiting the plug-in action of the plugged-in line end (2a), wherein the stop (34) has a conical abutment surface (36) for the line end (2a).

14. Connecting device according to Claim 13,
**characterized in that** the abutment surface (36) encloses a cone angle (α) ranging from 5° to 15°, and in particular of 10°, with a radial plane perpendicular to the plug-in axis (Y).

## Revendications

1. Ensemble de raccordement (1) pour conduit tubulaire (2), présentant
un corps de raccordement (6) doté d'une ouverture de réception (4) pour un conduit tubulaire (2) à insérer par une extrémité (2a) du conduit et un élément de maintien monté à l'intérieur de l'ouverture de réception (4) et qui empêche l'extraction de l'extrémité (2a) insérée du conduit,
l'élément de maintien étant configuré sous la forme d'une bague dentée élastique (8) dotée d'une partie périphérique extérieure (8a) et de plusieurs dents de maintien (8b) qui s'étendent radialement vers l'intérieur, inclinées obliquement dans la direction (X) d'insertion du tube et agissant en correspondance mécanique et/ou en correspondance de forme géométrique par rapport à l'extrémité (2a) du conduit,
la partie périphérique extérieure (8a) de la bague dentée (8) étant montée à l'intérieur du corps de raccordement (6) à un jeu de déplacement axial limité de manière définie par des sections de pose (12, 14) situées des deux côtés, à savoir une première section de pose (12) inférieure par rapport à la direction d'insertion et une deuxième section de pose (14) supérieure et axialement opposée,
la bague dentée (8) coopérant à la transition (15) entre la partie périphérique extérieure (8a) et les dents de maintien (8b) avec un bord périphérique de basculement (16) prévu à l'intérieur du corps de raccordement (6) de telle sorte que lorsque l'extrémité (2a) du conduit est insérée et vient se placer contre les dents de maintien (8b), la bague dentée (8) peut pivoter en basculant autour du bord de basculement (16) depuis une position repoussée par sa partie périphérique extérieure (8a) dans la direction d'insertion (X) en direction de la première section inférieure de pose (12) jusqu'à ce que la partie périphérique extérieure (8a) vienne se placer et soit soutenue contre la section supérieure de pose (14) axialement opposée,
les dents de maintien (8b) qui débordent radialement vers l'intérieur au-delà du bord de basculement (16) étant déformables élastiquement,
le corps de raccordement (6) présentant un boîtier en deux parties axiales présentant une première partie de boîtier (42) orientée dans la direction d'insertion et une deuxième partie de boîtier (44) en forme de manchon et présentant un côté d'embouchure de l'ouverture de réception (4),
**caractérisé en ce que**
les parties (42, 44) du boîtier sont reliées l'une à l'autre par une liaison périphérique encliquetable (46),
**en ce que** la première partie (42) du boîtier s'engage axialement et radialement en correspondance de forme géométrique dans une découpe d'encliquetage (50), en forme de rainure intérieure, de la deuxième partie (44) du boîtier, par une section d'enfichage (48),
**en ce qu'**un élément de libération (70) en forme de manchon qui engage à coulissement axial le corps de raccordement (6) est prévu de telle sorte que par insertion de l'élément de libération (70), la bague dentée (8) soit déformable élastiquement pour libérer l'extrémité (20) du conduit,
**en ce que** l'élément de libération (70) est empêché de se détacher par un encliquetage (74) prévu à l'intérieur du corps de raccordement (6), l'élément de libération (70) présentant dans ce but des bras d'encliquetage (76) formés à son extrémité tournée dans la direction d'insertion (X) par des fentes axiales et engageant par l'arrière une surface radiale d'épaulement (78) située à l'intérieure du corps de raccordement (6), par des becs d'encliquetage orientés radialement vers l'extérieur.

2. Ensemble de raccordement selon la revendication 1, **caractérisé en ce que** le bord de basculement (16) de la bague dentée (8) est formé sur une bague d'insertion (54) qui présente de préférence également la première section de pose (12), sous la forme d'une surface frontale adjacente radialement vers l'extérieur au bord de basculement (16).

3. Ensemble de raccordement selon la revendication 2, **caractérisé en ce qu'**à l'intérieur du corps de raccordement (6), par une surface frontale (58) orientée dans la direction d'insertion et en même temps par une surface de flanc (60) du corps de raccordement (6), opposée axialement à la surface frontale, la bague d'insertion (54) délimite une chambre d'étanchéité (62) pour un joint périphérique (10) d'étanchéité de tube.

4. Ensemble de raccordement selon l'une des revendications 1 à 3, **caractérisé en ce que** la deuxième section de pose (14) est formée pour la partie périphérique extérieure (8a) de la bague dentée (8) sur un élément annulaire d'insertion (64) qui est soutenu à l'intérieur du corps de raccordement (6) dans la direction de libération du tube sur une nervure (66) de bague de maintien qui déborde radialement vers l'intérieur.

5. Ensemble de raccordement selon l'une des revendications 1 à 4, **caractérisé en ce que** l'élément de libération (70) présente d'une part un joint périphérique extérieur d'étanchéité (82) qui assure l'étanchéité d'un espace annulaire par rapport au corps de raccordement (6) et d'autre part un joint intérieur d'étanchéité (84) qui assure l'étanchéité de l'interstice annulaire par rapport à l'extrémité (2a) du conduit.

6. Ensemble de raccordement selon la revendication 5, **caractérisé en ce que** le joint extérieur d'étanchéité (82) est également configuré comme élément élastique qui exerce une force de rappel sur l'élément de libération (70).

7. Ensemble de raccordement selon l'une des revendications 1 à 6, **caractérisé par** un élément annulaire de fermeture (88) qui ferme une ouverture annulaire partielle de l'ouverture de réception (4) qui reste du côté de l'embouchure et qui entoure le conduit tubulaire (2) inséré.

8. Ensemble de raccordement selon l'une des revendications 1 à 7, **caractérisé en ce que** la bague dentée (8) formée de préférence sous la forme d'une pièce moulée flexible estampée en tôle d'acier à ressort est divisée dans sa partie périphérique extérieure (8a) en plusieurs sections de liaison (92) qui relient les dents de maintien (8b) par l'intermédiaire de découpes (90) opposées radialement aux dents de maintien (8b).

9. Ensemble de raccordement (1) selon l'une des revendications 1 à 8, **caractérisé par** un manchon de soutien (20) disposée coaxialement à l'intérieur de l'ouverture de réception (4) du corps de raccordement (6) de telle sorte que lorsqu'elle est insérée, l'extrémité (2a) du conduit peut coulisser sur une surface cylindrique extérieure (22) du manchon de soutien (20), le manchon de soutien (20) présentant dans la zone d'action de l'élément de maintien (8) une section de soutien (24) qui présente une épaisseur de paroi (D1) conçue pour assurer un soutien radial de l'extrémité (2a) du conduit contre la force radiale de maintien, le manchon de soutien (20) présentant axialement sur au moins un côté de la section de soutien (24) une section de douille (26 et/ou 28) d'épaisseur (D2) réduite en vue d'augmenter sa section transversale intérieure d'écoulement active.

10. Ensemble de raccordement selon la revendication 9, **caractérisé en ce que** le manchon de maintien (20) présente axialement des deux côtés de la section de soutien (24) des sections de douille (26, 28) d'épaisseur (D2) réduite.

11. Ensemble de raccordement selon la revendication 10, **caractérisé en ce que** les surfaces périphériques intérieures de la section de soutien (24) et des sections voisines de douille (26, 28) se prolongent l'une dans l'autre par des sections de transition (30) de telle sorte que le manchon de soutien (20) présente un contour intérieur de type tuyère de Venturi.

12. Ensemble de raccordement selon l'une des revendications 9 à 11, **caractérisé en ce que** le manchon de soutien (20) présente à son extrémité avant libre une surface extérieure oblique d'insertion (32) de type chanfrein.

13. Ensemble de raccordement selon l'une des revendications 9 à 12, **caractérisé en ce que** dans sa partie maintenue à l'intérieur du corps de raccordement (6) et située face à son extrémité avant libre, le manchon de soutien (20) présente une butée (34) qui limite l'insertion de l'extrémité (2a) du conduit, la butée (34) présentant une surface de pose (36) conique pour l'extrémité (2a) du conduit.

14. Ensemble de raccordement selon la revendication 13, **caractérisé en ce que** la surface de pose (36) forme avec un plan radial perpendiculaire à l'axe d'insertion (Y) un angle de cône (α) compris dans la plage de 5° à 15° et en particulier de 10°.
